# EUROPEAN PATENT APPLICATION

(11) **EP 1 925 571 A2**
(43) Date of publication of application: **28.05.2008**
(21) Application number: 07022364.9
(22) Date of filing: 19.11.2007
(51) Int. Cl.: B65G 1/04

(54) **Multilevel warehouse system with lifting cells**

(30) Priority: 22.11.2006 IT MI20062233
(71) Applicant: FATA S.p.A., 10044 Pianezza TO (IT)
(72) Inventor: Di Rosa, Gaetano, 10025 Pino Torinese TO (IT); Patrito, Donato, 10040 Leini TO (IT)
(74) Representative: Faraggiana, Vittorio

(57) **Abstract**

A multilevel warehouse system is formed with shelves that define aligned rows of cells (11) for receiving containers, with corridors (12) in which shuttles (13) run for transferring containers along the corridors and inserting/extracting containers into/from cells facing the corridor. In the rows there are cells that comprise an elevator (15) for moving the containers between the levels. The elevator comprising a movable frame (18) that runs vertically along columns (17) and that supports stroke paths (29) that are an extension of stroke paths (28) in the shuttles for the running of storing carriages (14) carried by the shuttles. Means is provided for aligning the stroke paths of the movable frame with the stroke paths of a storing carriage taken to face the cell that comprises the elevator.

## Description

The present invention refers to an innovative multilevel warehouse for containers and the like provided with cells that make elevators between the levels.

Hereinafter, the term "container" will be used to indicate generally loads of large dimensions and great weight that are comparable with containers, but not in a limiting sense, intending by that term also other similar loading units (movable boxes or equivalent platforms for moving various goods).

As is known, automatic warehouses of greater capacity may have box compartments arranged on several superimposed levels. At each level there are transferring devices for transferring containers between one box compartment and another on the same level, whilst changes between levels are achieved by means of elevators located at the ends of the aisles in which the horizontal transferring devices run.

The weight of the moved containers can easily exceed 30 tonnes, whilst the length may exceed 12 meters with a width of approximately 2.5 meters and a height that is variable on the basis of the intended use of the container.

The elevators are consequently machines of large dimensions that occupy a relatively large area of the warehouse due to the total physical dimensions thereof and the need to leave space around the elevators to ensure accessibility to the various members for maintenance and repairs.

The total dimensions thereof consequently limit the possibility of arranging the elevators in the warehouse in the position that would be more appropriate from the functional point of view and even if the limitations on accessibility are accepted, with known solutions satisfactory compromises are not achieved.

The general object of this present invention is to overcome the aforementioned drawbacks and also others, as will become clear below, by providing an innovative multilevel warehouse system comprising cells that constitute elevators with reduced total dimensions and which are suitable for receiving the storing carriages of the shuttles, whilst ensuring effective transferring of containers between the levels of the warehouse.

In view of this object it has been decided to devise, according to the invention, a multilevel warehouse comprising shelves that define aligned rows of cells for receiving containers, the rows facing corridors in which shuttles run along the corridors to transfer containers and insert/extract containers into/from cells facing the corridors, in the rows there being cells that comprise a movement elevator for moving containers between the levels, the elevator comprising a movable frame that runs vertically along columns and which supports stroke paths that are an extension of stroke paths in the shuttles for the running of storing carriages carried by the shuttles, a machine room above the elevator comprising vertical movement motors for moving the frame that is movable along the columns, with cable wheels on which lifting cables wind that are relayed by pulleys on the upper part of the movable frame to be connected to upper cable anchorages, the movable frame comprising below bars that are driven to rotate and protrude towards the sliding columns and rest on resting blocks fixed to the columns at the levels to constitute a fixed and precise vertical aligning reference for the stroke paths of the movable frame with the stroke paths of a storing carriage taken to face the cell comprising the elevator.

In order to provide a clearer explanation of the innovative principles of the present invention and of the advantages thereof with respect to the prior art with the help of the attached drawings a possible embodiment thereof will be disclosed by way of example that applies such principles. In the drawings:
- figure 1 is a schematic plan view of a warehouse level according to the invention;
- figure 2 is a front raised schematic view of elevator cells of the warehouse in figure 1, with the elevator that extends between the levels;
- figure 3 is a schematic enlarged raised side view of the lifting unit and of the frame that is movable to the last level;
- figure 4 is a raised schematic front view of the unit and of the frame in figure 3;
- figure 5 is a schematic plan view of the machine room of the lifting unit in figure 3;
- figure 6 is a schematic section view of the guiding wheels of the elevator.

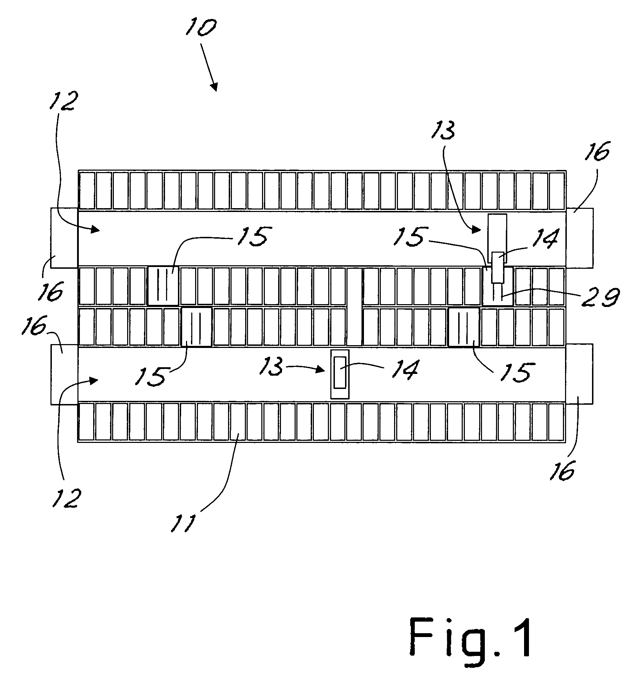

With reference to the figures, in figure 1 there is shown schematically the plan of a warehouse system, indicated generally by 10, made according to the invention. In the figure an intermediate level of the warehouse is shown. The other levels (in any number) will be substantially the same. Around the warehouse there will be known inserting, extracting and conveying systems for the containers (roads, railways, jetties for container ships, loading/unloading cranes, etc), which are not shown because they are easily imaginable by those skilled in the art. The warehouse may, according to the prior art, have a plane (usually intermediate) that is suitable for the entry/exit of the containers.

The warehouse 10 comprises a reticulated structure that forms a plurality of cells 11 for receiving containers that are aligned in rows to face corridors 12. Along the corridors 12 driven shuttles 13 run that are provided with devices 14 for introducing and extracting containers into and from the cells. At the ends of the corridors there may be traditional transferring elevators 16 between the levels.

Instead of certain storage cells there are vertical transfer cells 15, i.e. cells that form the movement well of an elevator device and receive from the shuttles a container as if they were normal cells for transferring the container from one level to another, where another shuttle can extract the container to transfer the container to a true storage cell 11.

As will be explained below, in order to enable this the elevator devices of the vertical transferring cells comprise lifting platforms that are provided with stroke paths for the devices 14 for introducing and extracting containers in the same way as normal cells.

Advantageously, in order not to disturb the pitch of the cells, the vertical transferring cells have a width that is the same as or a multiple of the width of the normal cells.

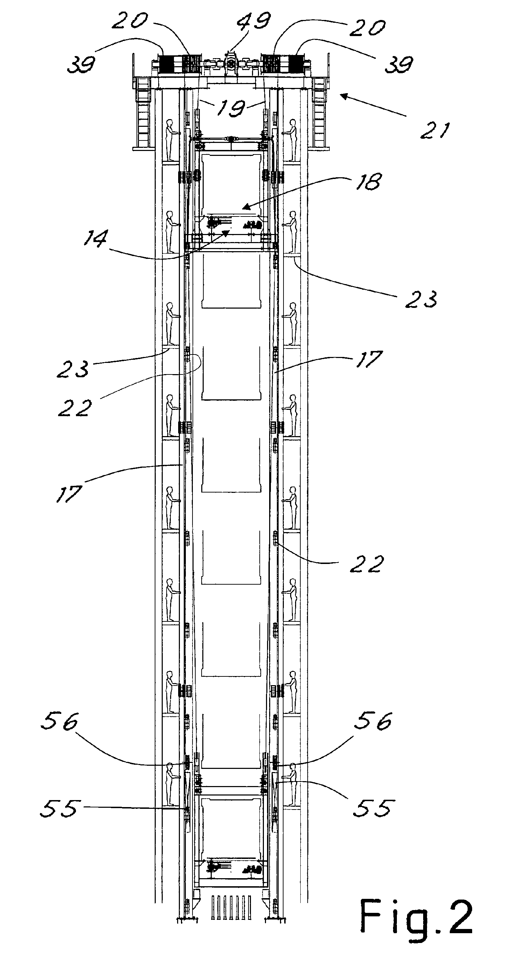

In figure 2 there is shown a frontal view of the cells with the elevator.

The elevator fundamentally consists of four guide columns 17 on which a movable frame or platform 18 runs vertically that is supported by four cables 19 that wind around four driven cable wheels 20, arranged on a platform or machine room 21 at the upper end of the columns.

In particular, the guide columns consist of elements that are bolted together and connected to the columns of the shelving that forms the cells so as to constitute a stiff structure that contains all the other mechanical members and occupies exactly the space of two box compartments of the shelvings so as not to alter the modular design of the shelving at the elevators and ensure the possibility of using any position inside the shelving to house an elevator without wasted space.

As can be seen well in figure 2, the connecting elements with the columns of the shelving, consisting of reticulated elements 22 arranged on the horizontal plane, are advantageously placed in a position that is intermediate to the horizontal elements of the cell shelving and also perform the function of acting as a supporting structure for access gangways 23 for the inspection, maintenance and repair of the stroke paths and of the mechanical members of the elevator.

The various gangway levels can be connected by means of ship's ladders that enable that permit free transit from ground level to the top of the elevator.

The position of the gangways can be defined in such a manner as to have the various mechanical members of the movable frame at an ergonomically correct height both for working on those situated in the lower part and for those situated in the upper part of the frame.

The movable frame will be provided with known centering and aligning devices for centering and aligning on the levels, which are not shown.

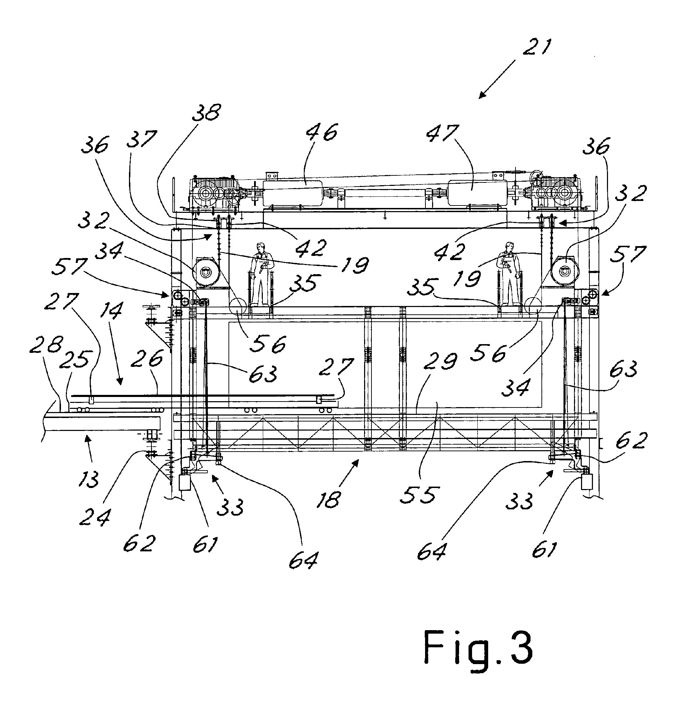

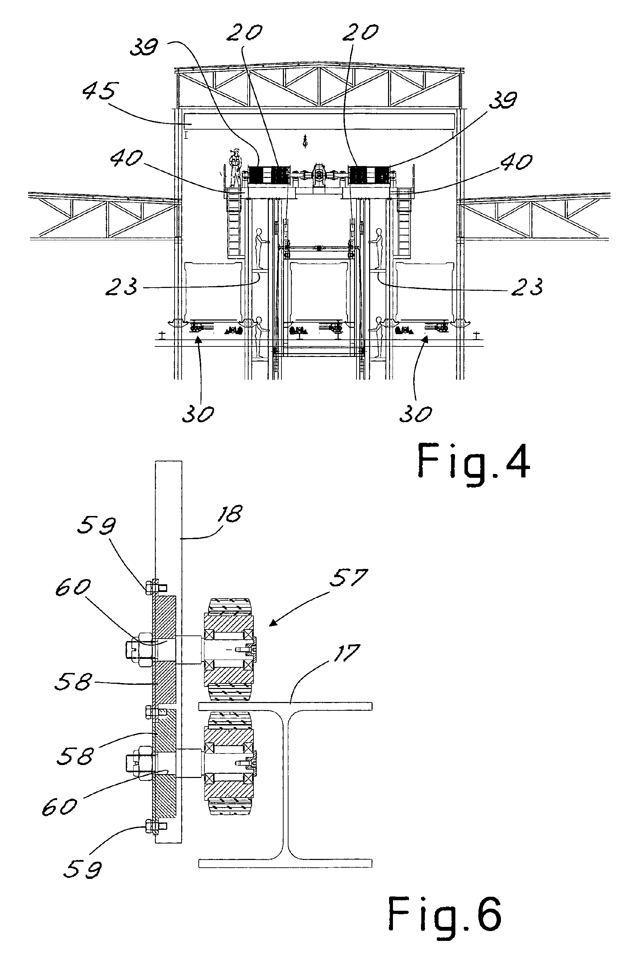

In figures 3 and 4 the structure of the machine room at the upper end of the columns and of the movable frame, which is stationary at the top level, is more visible. Cells are also visible between which the elevator is inserted. In figure 3 a shuttle 13 is also partially visible with the inserting and extracting device 14 partially inserted into the cell of the elevator.

As can well be seen in figure 3, according to the prior art the shuttles run along suitable tracks 24 parallel to the rows of cells and the inserting and extracting devices are made in the shape of storing carriages 14 that are carried by the shuttle to face a cell and are motor-driven to enter and exit the cell and transfer containers between the cell and the shuttle. The storing carriages are provided with at least one conveying unit formed by a base frame 25 with wheels driven for running on rails for entering and exiting movement, with a loading bed 26 arranged above the base frame and intended for supporting a container. Between the bed and the base frame there are fluid lifting units 27, distributed longitudinally to the carriage for controlled lifting of the bed. The vertical movement of the bed enables a container to be lifted from suitable supporting shelves located in the cells, to extract the container, or to rest a container on the shelves in the cells to store the container. The storing carriage runs on stroke paths (preferably parallel tracks) located on the shuttle, in the storage cells and on the platform of the elevator. In figure 3, the stroke paths of the shuttle are indicated by 28 and those of the platform by 29. In figure 4 those of the cells are also shown, indicated by 30.

The movable frame is guided along the columns by means of pairs of wheels 57 that are adjustable for obtaining minimum clearance with respect to the guide and preventing oscillation of the frame, in particular longitudinally when it is stressed by the forces of inertia during startup and braking that are induced by the container conveying device of the elevator.

As can also be clearly seen in figure 3, the movable frame 18 is a large cage-shaped welded structure inside which the containers are introduced. Above the frame there are pulleys 32 for winding the lifting cables 19.

The four cables 19 that support the movable frame 18 descend directly from the cable wheels 20 to the relaying pulleys 32 positioned above the movable frame and return to four cable anchorages 36 made on the structure of the upper platform.

Advantageously, each cable 19 can be connected to the cable anchorage with the interposing of a suitable known loading cell 37, owing to which it is possible to measure the stress on the cables and detect overloads or crawling and weigh the load in transit.

Between the end of each cable 19 and the fixed structure a hydraulic cylinder 38 is also advantageously present with a short stroke, as the hydraulic cylinder 38 is connected to a suitable control unit (not shown) it enables the end of the cable to be moved vertically.

With this option, even in the case of conveying containers with a significantly off-centre load it is possible to raise the movable frame perfectly horizontally inasmuch as the different stretching of the cables can be compensated by the action of the cylinders sent by a suitable known electronic leveling control apparatus.

In the event of breakage of a cable the movable frame remains supported by the nearest whole cable and by the cable that is diagonally opposite and with a manual command it is possible to reach a stop position at a level where the container will be unloaded and the damaged cable will be replaced.

In the low lateral position of the movable frame there are two pairs of bolts 33, each controlled by means of a known connecting rod-crank mechanism with a gearmotor 34 located in the upper part of the movable frame. A tie rod 63 connects the gearmotor to the lever of the bolt.

The gearmotor, the crank arms, the corresponding shafts and joints are installed above, on a small platform 35 that is part of the movable frame, so as to have available in any position of the frame a safe work station for maintenance personnel summoned to intervene on these members. From the same platform the relaying pulleys of the lifting cables of the movable frame can also be accessed.

The bolt levers and the control connecting rods are on the other hand arranged on two sides of the movable frame so as to be accessible from the gangways 23 arranged on the two sides of the elevator.

The object of the bolts is to constitute a fixed and precise reference to the level to maintain the movable frame anchored and aligned to the fixed structure for the entire duration of the carriage transfer that takes the containers on board the movable frame, with the stroke paths of the mobile platform aligned with the stroke paths of a storing carriage taken to face the cell with the elevator.

Each bolt consists of a simple "Z"-shaped lever rotating on a tough pivot 62 controlling the aforesaid connecting rod and crank movement with corresponding gearmotor 34.

The bolt-lever can have two positions: in the first "open" position it enables the movable frame to be moved; in the second "closed" position the lower end thereof is in the direction of appropriate resting blocks 61 fixed to the columns of the elevator, on which resting blocks 61 it comes to rest when it stops at a level. A shelf 64 on the frame is a rest for the other end of the Z so as to stop further rotation of the bolt.

The profile of the lever and the position of the rotation point make the opening of the bolts mechanically impossible unless the movable frame has first been raised from the resting position.

This ensures with maximum safety that during transit of the carriage for inserting the containers the movable frame cannot move (even if an incorrect manual command is given) with the risk of making the container fall.

Owing to the structure of the bolt, the bolt is further self-closing and closes completely when the movable frame aligns on the floor and the bolt rests on the block 61, even if the control motor has not completed the closing stroke due to a fault that arose during movement.

A fault message is generated, but it is possible to complete the current container transfer cycle.

The switch from the "open" to "closed" position obtained by rotation around an axis rather than through longitudinal motion makes it easy and cheap to devise an efficient lubrication system that ensures the long-time reliability of the mechanism even when operating in difficult environmental conditions such as a marine environment.

Advantageously, the connecting rod-crank mechanism that controls movement of the levers is made with the overhanging crank buttons to enable continuous 360° rotation even though in normal operation the bolts are opened and closed with rotation 180° forwards and 180° backwards.

In this way, in the event of malfunction of one of the electric limit switches that control the normal stroke the crank arm continues to rotate by 360° and the bolt oscillates between the open position and the closed position without mechanical jamming occurring. A fault message is generated and the irregularity is remedied by simply replacing the broken limit switch.

As shown in figure 4, in order to replace heavy components a service bridge crane 45 can be placed above the machine room 45 that enables the components to be moved latterly to the elevator until they are above the first box compartment of the warehouse on the right side or on the left side of the elevator.

By means of the horizontal movement systems of the containers that are normally present in the warehouse suitable open containers can be introduced into one or both the side box compartments, which containers are open in the upper "open top*"* part or consist of a simple "flat rack" bed that enable the damaged components to be evacuated and the spare parts and all the necessary equipment, even if of large dimensions, to be brought to the zone.

During maintenance operations the "machine room", with the addition of the two suitable containers deposited in the neighboring box compartments, is expanded by about 60 square meters, to enable maintenance staff to work comfortably, in safety with all the equipment available in the immediate vicinity even whilst the rest of the warehouse continues to operate regularly.

As can also be seen in figure 4, each of the cable wheels 20 is connected to a second cable wheel 39 on which a second supporting cable 40 of a counterweight is wound. There are two counterweights 55, arranged on each side of the movable platform and supported by the cables of the two cable wheels 39 of the respective side.

On each counterweight 55 there are four relaying pulleys 56, arranged in pairs in the upper part at each end thereof. The two cables 40 of each counterweight lead away from the respective cable wheels 39, pass on a pair of relaying pulleys 43, 44 fixed to the upper fixed structure, descend to the relaying pulleys 56 on to the counterweight and ascend again to cable anchorages 42 made on the structure of the upper platform.

In particular, the cable 40 that descends to an end of the counterweight winds 90° around a first pulley of the counterweight, passes horizontally there above, winds around a second pulley at the opposite end of the counterweight and ascends again to the cable anchorage 42.

The other cable 40 of the same counterweight is relayed by the other two pulleys 43, 44 and descends to the other end of the counterweight, following a symmetrical path through the other two pulleys 56 of the counterweight. In this way, each end of the counterweight is supported by two independent cables 40 so that in the event of a breakage of one thereof the other supports the counterweight that can be taken by a manual control to the preferable position for replacing the damaged cable.

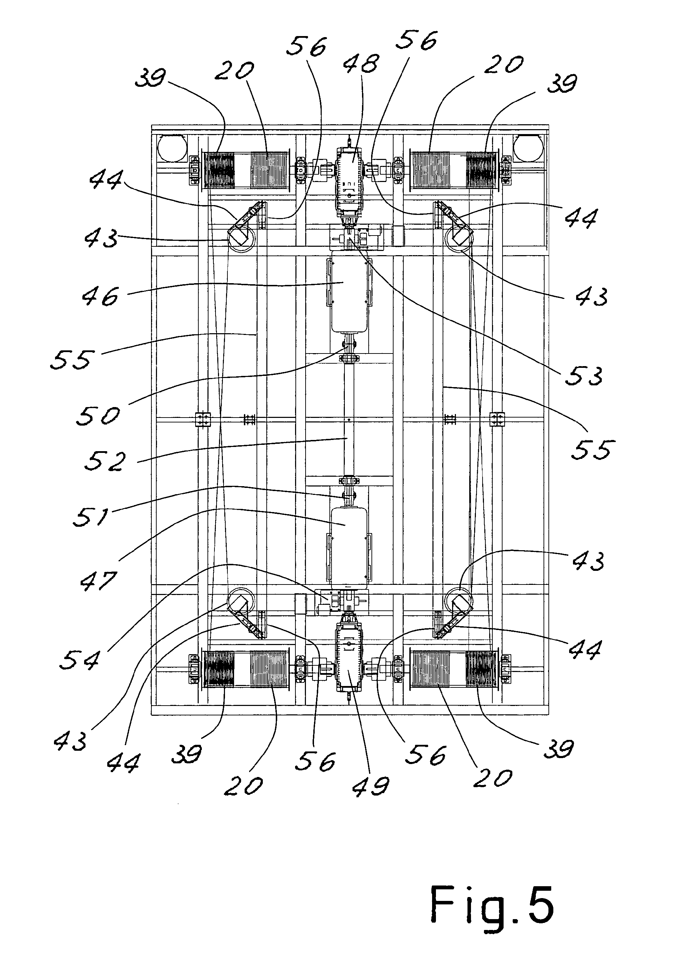

This is also shown in figure 5, where the "machine room" 21 is seen schematically in a plan view on the roof of the elevator and receives the four cable wheels 20 and the four cable wheels 39. In the figure there are visible the horizontal pulleys 43 and tilted vertical crossed-relay pulleys 44 of the supporting cables 40 of the counterweight.

In the same figure 5 the kinematic connection between the motors and all the cable wheels 20 and 39 can also be seen clearly.

Elevators used in the field of industrial automation, in order to avoid system stops due to faults in the lifting unit, normally have a lifting unit consisting of a self-braking gearmotor that is coupled by means of a disconnectable joint with the winding cable wheel of the cables or with the pinion of the lifting chain and consists of an identical second reserve gearmotor which is left on standby.

In the event of a fault of the service motor, by means of the disconnectable joints, the faulty gearmotor is disconnected and the reserve gearmotor is connected.

This solution is technically valid but is very burdensome due to the significant cost that the various components incur when considerable torque or power are at play (the unit in service and the reserve unit must both be of adequate dimensions to cope with the maximum capacity of the elevator).

The lifting unit of the elevator that is the object of the invention consists on the other hand of two electric motors 46, 47, each connected to a corresponding bevel helical reduction gear 48, 49 provided with two outlet shafts that are aligned on and connected to a pair of cable wheels 20, 39. Between the motor and the respective reduction gear there is a known controllable brake 53, 54.

The two motors also have a second shaft 50, 51 exiting the rear part. A drive shaft 52 connects together the two rear ends of the motor shafts.

This arrangement of the members that constitute the lifting unit is advantageous because whilst it achieves a stiff mechanical connection between the corner positions of the four lifting cable wheels that safeguards against possible misalignments of the movable frame it enables a redundant design to be achieved cheaply only for the parts that are important for safety and reliability such as the brakes and the motors, which can become faulty without warning. Reduction gears, on the other hand, show clearly and in advance the situations that over time may cause the reduction gears to develop faults, so that it is possible to program the maintenance and repair interventions therefore.

The unit normally works with both motors or both brakes, the torque that each motor is able to dispense is greater than half of the torque that is necessary for lifting the maximum load so that in normal operation both motors work at reduced load with benefits for duration and the likelihood of breakdowns.

If a motor develops a fault the motor is electrically disconnected and acts as a drive shaft transmitting movement from the other active motor to the reduction gear near the faulty motor.

The motor that remains in service, by working with a temporary overload at a slightly reduced speed, continues to run the elevator for the time required to organize the repair of the faulty motor.

Considering that most containers have a weight that is much less than the maximum permitted weight for which the elevator has been designed, even with operation with a single motor the latter is very rarely in a condition of temporary overload with the need to reduce the speed. It should also be considered that the warehouse management system knows, amongst other information, the weight of each container. In the event of a motor fault, it can thus direct heavy containers to another fully active elevator.

The same principle applies to the brakes: both normally work at reduced load, in the event of a fault only one works at full load for the time required to organize the repair.

In figure 6 there is shown in a horizontal section the zone of one of the pairs of guide wheels 57 of the movable frame along the columns. The running wheels of the movable frame along the columns are adjusted during final adjustment of the system and it is advantageous that adjustment is not altered during replacement of a wheel, so that a replacement intervention takes a shorter time and does not require specialized personnel.

The simple and advantageous solution shown in figure 6 consists of shaping the axis support for each wheel of the pair as a disc 58. The disc 58 has a plurality of equidistant holes 59 that are arranged along a circumference with a diameter that is greater than that of the wheel, and a hole 60 through which the axis of the wheel passes. The hole 60 is located centrally to the holes 59 but is shifted with respect to the centre of the circumference on which they are arranged.

The discs 58, with the relative eccentrically fixed wheels, are fixed to the structure of the movable frame 18 by means of screws passing through the holes on the circumference.

Each disc can be mounted in a different angular position so as to bring the wheel more or less near the stroke path.

After the optimal wheel position has been determined, a reference point is determined at a suitable reference notch carried by the disc. By making the two references coincide at the moment of reassembly, the initial conditions are restored automatically.

This solution also enables the wheels to be disassembled and refitted easily and fast as it is not necessary to remove or move any other member to access the wheel because the wheel can be extracted through the hole on the movable frame that receives the plate 58.

At this point it is clear how the preset objects have been achieved.

Naturally, the above disclosure of an embodiment applying the innovative principles of the present invention is given by way of example of such innovative principles and must not therefore be taken to limit the legal scope of what is claimed herein. For example, the number of levels, of corridors at each level, and of cells along each corridor may vary according to specific needs, just as the number of elevators and of shuttles may vary. The containers may be moved according to the smaller axis thereof rather than according to the larger axis thereof. Also the cables of the counterweights may have hydraulic cylinders for compensating the stretching.

## Claims

1. Multilevel warehouse system comprising shelving that define aligned rows of cells (11) for receiving containers, the rows facing corridors (12) in which shuttles (13) run that transfer containers along the corridors and inserting/extracting containers into/from cells facing the corridor, in the rows there being cells that comprise an elevator (15) for moving containers between the levels, the elevator comprising a movable frame (18) that runs vertically along columns (17) and supports stroke paths (29) that are a prolongation of stroke paths (28) in the shuttles for the running of storing carriages (14) carried by the shuttles, a machine room (21) that is higher than the elevator comprising motors (46, 47) for moving the movable frame (18) vertically along the columns, with cable wheels (20) around which lifting cables (19) are wound that are relayed by pulleys (32) on the upper part of the movable frame for connecting to upper cable anchorages (36), the movable frame (18) comprising bolts (33) below that are driven to rotate and push to the sliding columns (17) and rest on resting blocks (61) fixed to the columns at levels for constituting a fixed and precise vertical alignment reference of the stroke paths of the movable frame with the stroke paths of a storing carriage taken to face the cell comprising the elevator.

2. Multilevel warehouse system according to claim 1, **characterized in that** the transverse dimensions of the elevator coincide with or are a multiple of the transverse dimensions of a cell of the warehouse to be insertible inside the shelving whilst maintaining the general dimension and pitch of the cells unvaried.

3. Multilevel warehouse system according to claim 1, **characterized in that** the elevator has at the top part of the movable frame a platform that enables maintenance personnel to have a work station that is safe and available at any point of the frame stroke for inspection and maintenance of the relaying pulleys of the lifting cables and any other mechanical components located above the movable frame.

4. Multilevel warehouse system according to claim 1, **characterized in that** the bolts supporting the movable frame are mechanically moveable away from the resting position only when the frame is supported by the resting position.

5. Multilevel warehouse system according to claim 1, **characterized in that** the bolts supporting the movable frame rotate automatically to the complete rest condition by means of interference with the resting blocks, even after just a partial movement to the support condition.

6. Multilevel warehouse system according to claim 4, **characterized in that** it comprises a gearmotor with connecting rods and movement crank, through a suitable tie rod, bolts each made in the shape of a Z lever hinged on the frame to have an end of the Z that rests on said resting blocks and the other end that rests on a stroke limit shelf on the frame to lock further rotation of the bolt when rested on the resting block and enable the release maneuver of the bolt only after a lifting movement of the elevator from the floor.

7. Multilevel warehouse system according to claim 6, **characterized in that** the gearmotor is located above the movable frame.

8. Multilevel warehouse system according to claim 1, **characterized in that** at the top of the guide columns the elevator has a platform (21) that houses the cable wheels for winding the cable and the corresponding motors and lifting reduction gears.

9. Multilevel warehouse system according to claim 8, **characterized in that** above the platform (21) there is a service bridge crane (45) that enables lifting or unloading from stations or cells to the right or the left of the elevator.

10. Multilevel warehouse system according to claim 1, **characterized in that** at the end of the lifting cables that are connected to the upper cable anchorages (36) there are connected loading cells (37) for measuring weights supported by the cables that support the movable frame.

11. Multilevel warehouse system according to claim 1, **characterized in that** at the end of the lifting cables connected to the upper cable anchorages (36) there are hydraulic cylinders (38) for compensating the stretching of the individual cables that support the movable frame.

12. Multilevel warehouse system according to claim 1, **characterized in that** with each winding cable wheel (20) of the lifting cables there is coupled a winding cable wheel (39) for winding a cable (40) supporting a counterweight (55) that runs along the columns.

13. Multilevel warehouse system according to claim 12, **characterized in that** there are two counterweights (55) on two opposite sides of the elevator and each counterweight is supported by a pair of cables (40) wound on two respective cable wheels (39).

14. Multilevel warehouse system according to claim 13, **characterized in that** at the ends of each counterweight (55) there are two pairs of relaying pulleys (56) to receive at an end from above a cable (40) of the pair and relay the cable (40) upwards from the opposite end and vice versa.

15. Multilevel warehouse system according to claim 1, **characterized in that** the movable frame (18) comprises guide wheels (57) for guiding the movable frame along the columns (17) that are mounted on a disc-shaped support (58) with an axis that is eccentric with respect to the axis of the wheel and is installable in a plurality of various angular positions, each of which is unequivocally identifiable, on the structure of the movable frame.

16. Multilevel warehouse system according to claim 15, **characterized in that** a guide wheel can be removed without dismantling other components from the frame apart from the disc-shaped support.

17. Multilevel warehouse system according to claim 1, **characterized in that** the elevator has a lifting unit comprising two motors (46, 47), two brakes (53, 54), two reduction gears (48, 49) and a drive shaft (52) stiffly connecting the axes of the two motors.

18. Multilevel warehouse system according to claim 17, **characterized in that** in normal operating conditions both motors and the brakes collaborate to lift and retain the load and that in the event of a motor or brake fault only one motor and one brake are able to ensure emergency operation of the elevator.

19. Multilevel warehouse system according to claim 17, **characterized in that** the motors (46, 47) are arranged axially aligned for connecting to one another from the near side through said drive shaft (52), on the side opposite each motor being connected to a respective reduction gear (48, 49) of bevel helical type the outlets of which are opposite and coaxial with two cable wheels (20) for winding the lifting cables.

20. Multilevel warehouse system according to claim 1, **characterized in that** the elevator has on the two sides a plurality of gangways (23) arranged at the height required for performing inspection, maintenance and repair tasks.
